# EUROPÄISCHE PATENTANMELDUNG

(11) **EP 4 613 987 A1**
(43) Veröffentlichungstag der Anmeldung: **10.09.2025**
(21) Anmeldenummer: 25154585.1
(22) Anmeldetag: 29.01.2025
(51) Int. Cl.: F01N 13/00

(54) **SONDENTRAGEBAUGRUPPE, INSBESONDERE FÜR EINE ABGASANLAGE EINER BRENNKRAFTMASCHINE**

(30) Priorität: 04.03.2024 DE 102024106105
(71) Anmelder: Purem GmbH, 66539 Neunkirchen (DE)
(72) Erfinder: Reyer, Bernhard, Altbach (DE); Schäfer, Christian, Unterensingen (DE); Reinhardt, Frank, Püttlingen (DE)
(74) Vertreter: Ruttensperger Lachnit Trossin Gomoll

(57) **Zusammenfassung**

Eine Sondentragebaugruppe, insbesondere für eine Abgasanlage einer Brennkraftmaschine, umfasst einen Sondentragekörper (14) mit einer Wand (18), wobei in der Wand (18) eine an einer Wandaußenseite (20) von einer Wandaußenoberfläche (22) umgebene Wandöffnung (44) vorgesehen ist, sowie einen im Bereich der Wandöffnung (44) an der Wandaußenoberfläche (22) festgelegten Sondenstutzen (24), wobei in dem Sondenstutzen (24) eine den Sondenstutzen (24) in Richtung einer Sondenaufnahmeöffnung-Längsachse (L) von einem von der Wand (18) entfernt positionierten distalen axialen Ende (30) des Sondenstutzens (24) zu einem der Wand (18) naheliegend positionierten proximalen axialen Ende (32) des Sondenstutzens (24) durchsetzende und zu der Wandöffnung (44) offene Sondenaufnahmeöffnung (34) vorgesehen ist. Im Bereich des proximalen axialen Ende (22) des Sondenstutzens (24) ist eine die Sondenaufnahmeöffnung (24) ringartig umgebende, bezüglich der Sondenaufnahmeöffnung-Längsachse (L) angewinkelte Sondenstutzen-Verbindungsfläche (38) mit in Richtung von dem distalen axialen Ende (30) des Sondenstutzens (24) weg abnehmendem Radialabstand zur Sondenaufnahmeöffnung-Längsachse (L) vorgesehen, wobei der Sondenstutzen (24) durch an die Sondenstutzen-Verbindungsfläche (38) und an einen Verbindungsabschnitt (48) der Wandaußenoberfläche (22) angebundenes Verbindungsmaterial (50) an der Wand (18) festgelegt ist.

## Beschreibung

Die vorliegende Erfindung betrifft eine Sondentragebaugruppe, die beispielsweise dafür eingesetzt werden kann, eine Messsonde, wie zum Beispiel Temperatursensor oder Gassensor, an einer Abgasanlage einer Brennkraftmaschine anzubringen.

Aus der DE 10 2019 104 770 A1 ist eine Sondentragebaugruppe bekannt, bei welcher ein Sondenstutzen durch eine Schweißnaht materialschlüssig an eine Außenseite einer Wand einer Abgasführungskomponente angebunden oder mit der Wand integral ausgebildet ist. In einem in den Sondenstutzen eingesetzten Sondentrageeinsatz ist eine Aufnahmeöffnung zur Aufnahme einer Messsonde ausgebildet.

Es ist die Aufgabe der vorliegenden Erfindung, eine baulich einfach ausgestaltete, gegen thermomechanische Belastungen resistente Sondentragebaugruppe bereitzustellen.

Erfindungsgemäß wird diese Aufgabe gelöst durch eine Sondentragebaugruppe, insbesondere für eine Abgasanlage einer Brennkraftmaschine, umfassend:
- einen Sondentragekörper mit einer Wand, wobei in der Wand eine an einer Wandaußenseite von einer Wandaußenoberfläche umgebene Wandöffnung vorgesehen ist,
- einen im Bereich der Wandöffnung an der Wandaußenoberfläche festgelegten Sondenstutzen, wobei in dem Sondenstutzen eine den Sondenstutzen in Richtung einer Sondenaufnahmeöffnung-Längsachse von einem von der Wand entfernt positionierten distalen axialen Ende des Sondenstutzens zu einem der Wand naheliegend positionierten proximalen axialen Ende des Sondenstutzens durchsetzende Sondenaufnahmeöffnung vorgesehen ist,
wobei im Bereich des proximalen axialen Ende des Sondenstutzens eine die Sondenaufnahmeöffnung ringartig umgebende, bezüglich der Sondenaufnahmeöffnung-Längsachse angewinkelte Sondenstutzen-Verbindungsfläche mit in Richtung von dem distalen axialen Ende des Sondenstutzens weg abnehmendem Radialabstand zur Sondenaufnahmeöffnung-Längsachse vorgesehen ist, wobei der Sondenstutzen durch an die Sondenstutzen-Verbindungsfläche und an einen Verbindungsabschnitt der Wandaußenoberfläche angebundenes Verbindungsmaterial an der Wand festgelegt ist.

Durch das Bereitstellen der nach Art einer Anfasung ausgebildeten Sondenstutzen-Verbindungsfläche wird Material von dem Sondenstutzen weggenommen und durch das Verbindungsmaterial ersetzt. Da das Verbindungsmaterial, ebenso wie das Aufbaumaterial der Wand, im Allgemeinen ferritisches Material ist, während der Sondenstutzen beispielsweise mit austenitischem Material aufgebaut sein kann, kann bei verringertem Bauraumbedarf mit der erfindungsgemäßen Struktur der Materialanteil an ferritischem Material erhöht werden, wodurch im Bereich der Anbindung des Sondenstutzens an die Wand auch angesichts der verschiedenen thermischen Ausdehnungsverhalten dieser beiden Körper eine erhöhte Verbindungsfestigkeit erreicht werden kann.

Für eine definierte Positionierung kann der Sondenstutzen mit einer im Bereich des proximalen axialen Endes ausgebildeten Wandanlagefläche an der Wand anliegen.

Um die Sondenstutzen-Verbindungsfläche in maximalem Ausmaß zur Anbindung des Verbindungsmaterials nutzen zu können, wird vorgeschlagen, dass an die Sondenstutzen-Verbindungsfläche eine im Wesentlichen axial orientierte und im Wesentlichen orthogonal zur Sondenaufnahmeöffnung-Längsachse sich erstreckende, die Sondenaufnahmeöffnung-Längsachse ringartig umgebende Sondenstutzen-Stirnfläche anschließt, und dass die Sondenstutzen-Stirnfläche die Wandanlagefläche bereitstellt.

Die exakte Ausrichtung des Sondenstutzens bezüglich der Wandöffnung kann dabei in einfacher Weise dadurch unterstützt werden, dass an dem Sondenstutzen im Bereich des proximalen axialen Endes ein über die Sondenstutzen-Stirnfläche sich axial hinaus erstreckender, von der Sondenstutzen-Stirnfläche umgebener Zentrieransatz vorgesehen ist.

Bei einer baulich einfach zu realisierenden kompakten Ausgestaltung kann die Sondenstutzen-Verbindungsfläche die Wandanlagefläche bereitstellen.

Auch dabei kann die exakte Ausrichtung des Sondenstutzens bezüglich der Wandöffnung unterstützt werden, wenn an dem Sondenstutzen im Bereich der zweiten Stirnseite ein an die Sondenstutzen-Verbindungsfläche anschließender und über diese sich axial hinaus erstreckender, von der Sondenstutzen-Verbindungsfläche umgebener Zentrieransatz vorgesehen ist.

Die sich in axialer Richtung verjüngende Sondenstutzen-Verbindungsfläche kann beispielsweise im Wesentlichen konisch ausgebildet sein.

Für eine thermisch und chemisch resistente Anbindung wird vorgeschlagen, dass das Verbindungsmaterial durch eine Schweißnaht bereitgestellt ist.

Da insbesondere in Abgasanlagen abgasführende Komponenten im Allgemeinen rohrartig ausgebildet sind, also gekrümmte Wände aufweisen, wird vorgeschlagen, dass an der Wand im Bereich der Wandöffnung ein Verbindungsplateau ausgebildet ist, wobei an dem Verbindungsplateau der die Wandöffnung umgebende, in Richtung einer Wandöffnung-Mittenachse orientierte und zu der Wandöffnung-Mittenachse im Wesentlichen orthogonal sich erstreckende Verbindungsabschnitt der Wandaußenoberfläche vorgesehen ist.

Um ausreichend Raum für das Einbringen des Verbindungsmaterials bereitzustellen bzw. das Verbindungsmaterial über den ganzen Umfang definiert einbringen zu können, wird vorgeschlagen, dass das Verbindungsplateau an der Wand durch Umformen der Wand in Richtung zur Wandaußenseite und in Richtung von einem von der Wand begrenzten Innenraum weg gebildet ist.

Um das Verbindungsplateau mit einer ausreichend großen Oberfläche zur stabilen Anbindung des Sondenstutzens an die Wand bereitstellen zu können, wird vorgeschlagen, dass das Verbindungsplateau durch Ziehen, vorzugsweise Tiefziehen oder Streckziehen, der Wand gebildet ist.

Für eine stabile Anbindung des Sondenstutzens an das Verbindungsplateau kann vorgesehen sein, dass der Verbindungsabschnitt der Wandaußenoberfläche die Sondenstutzen-Verbindungsfläche wenigstens teilweise radial überlappt und sich nach radial außen über eine vorzugsweise im Wesentlichen zylindrische Außenumfangsfläche des Sondenstutzens hinaus erstreckt, und dass das Verbindungsmaterial sich radial nach außen über die Außenumfangsfläche des Sondenstutzens hinaus erstreckt.

Die Erfindung betrifft ferner ein Verfahren zur Herstellung einer Sondentragebaugruppe mit dem vorangehend beschriebenen Aufbau, bei welchem Verfahren das Verbindungsplateau durch Ziehen, vorzugsweise Tiefziehen oder Streckziehen, der Wand gebildet wird.

Die Erfindung betrifft ferner Abgasanlage, insbesondere für eine Brennkraftmaschine in einem Fahrzeug, umfassend wenigstens eine erfindungsgemäß aufgebaute Sondentragebaugruppe.

Dabei kann in der Abgasanlage die Wand einen Abgasströmungsraum begrenzen, wobei die Wandaußenseite von dem Abgasströmungsraum weg orientiert ist und an dem Sondenstutzen eine Messsonde getragen ist.

Die Messsonde kann beispielsweise zur Bereitstellung von eine Temperatur im Bereich des Abgasströmungsraums repräsentierender Information oder zur Bereitstellung von eine Zusammensetzung von den Abgasströmungsraum durchströmendem Abgas repräsentierender Information ausgebildet sein.

Die vorliegende Erfindung wird nachfolgend mit Bezug auf die beiliegenden Figuren detailliert beschrieben. Es zeigt:
- Fig. 1: in prinzipieller Darstellung einen Abschnitt einer Abgasanlage;
- Fig. 2: eine Seitenansicht eines Sondenstutzens;
- Fig. 3: den an einer Wand eines Sondentragekörpers festgelegten Sondenstutzen der Fig. 2;
- Fig. 4: eine der Fig. 2 entsprechende Ansicht einer alternativen Ausgestaltungsform eines Sondenstutzens;
- Fig. 5: den an einer Wand eines Sondentragekörpers festgelegten Sondenstutzen der Fig. 4.

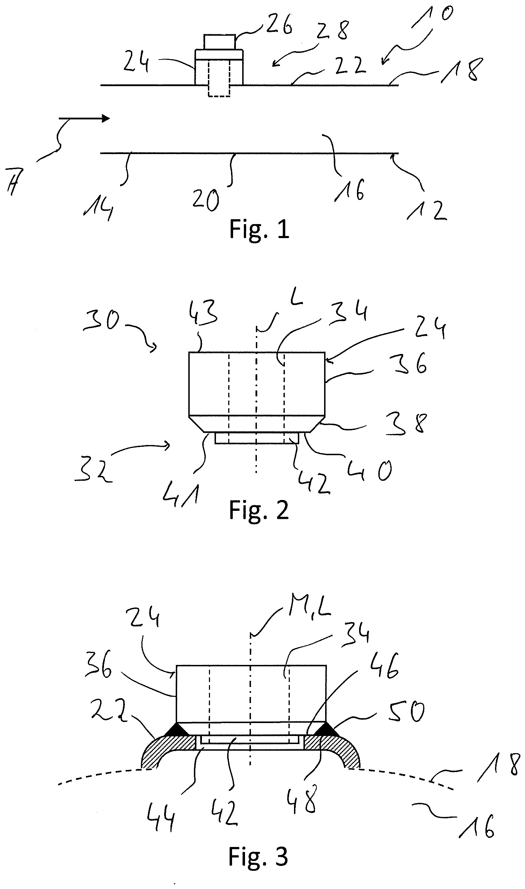

Die Fig. 1 ist ein Abschnitt einer Abgasanlage 10 für eine Brennkraftmaschine beispielsweise in einem Fahrzeug dargestellt. Die Abgasanlage 10 umfasst eine beispielsweise rohrartig oder gehäuseartig ausgebildete Abgasführungskomponente 12, welche von dem von einer Brennkraftmaschine ausgestoßenem Abgas A durchströmt wird. Die Abgasführungskomponente 12 bildet einen im Allgemeinen mit Metallmaterial, insbesondere Blechmaterial, aufgebauten Sondentragekörper 14 mit einer den von dem Abgas A durchströmten, einen Innenraum bereitstellenden Abgasströmungsraum 16 der Abgasführungskomponente 12 begrenzenden Wand 18. An einer von dem Abgasströmungsraum 16 weg orientierten Außenseite 20 weist die Wand 18 eine Wandaußenoberfläche 22 auf, an welcher ein nachfolgend detailliert beschriebener Sondenstutzen 24 festgelegt ist. An dem Sondenstutzen 24 kann eine Messsonde 26 angebracht werden, durch welche Information bereitgestellt werden kann, welche beispielsweise die Temperatur des den Abgasströmungsraum 16 durchströmenden Abgases A repräsentiert oder die chemische Zusammensetzung bzw. das Vorhandensein eines Bestandteils des Abgases A repräsentiert. Der Sondenstutzen 24 bildet zusammen mit dem Sondentragekörper 14 eine allgemein mit 28 bezeichnete Sondentragebaugruppe für die Messsonde 26.

Der in Fig. 2 dargestellte Sondenstutzen 24 weist ein von der Wandaußenoberfläche 22 der Wand 18 entfernt positioniertes distales axiales Ende 30 und ein der Wand 18 naheliegend positioniertes proximales axiales Ende 32 auf. Zwischen dem distalen axialen Ende 30 und dem proximalen axialen Ende 32 des Sondenstutzens 24 erstreckt sich eine in Fig. 2 durch Strichlinie angedeutete Sondenaufnahmeöffnung 34 entlang einer Sondenaufnahmeöffnung-Längsachse L. Der Sondenstutzen 24 weist eine die Sondenaufnahmeöffnung-Längsachse L beispielsweise im Wesentlichen rotationssymmetrisch umgebende, ringartige Struktur auf. In seinem die Sondenaufnahmeöffnung 34 umgebenden Bereich kann der Sondenstutzen 24 mit einem Innengewinde ausgebildet sein, in welches die Messsonde 26 mit einem komplementären Außengewinde eingeschraubt werden kann, um einerseits die Messsonde 26 stabil am Sondenstutzen 24 zu halten und andererseits einen gegen den Austritt von Abgas dichten Abschluss zu erreichen.

Der Sondenstutzen 24 weist eine bezüglich der Sondenaufnahmeöffnung-Längsachse L im Wesentlichen zylindrische Außenumfangsfläche 36 beispielsweise mit kreisförmiger Querschnittskontur auf, welche sich beispielsweise ausgehend von distalen axialen Ende 30 bis in den Bereich des proximalen axialen Endes 32 des Sondenstutzens 24 und somit über den größeren axialen Erstreckungsbereich des Sondenstutzens 24 erstreckt. Im Bereich des proximalen axialen Endes 32 schließt an die Außenumfangsfläche 36 eine beispielsweise konisch in Richtung vom distalen axialen Ende 30 des Sondenstutzens 24 weg sich radial verjüngende Sondenstutzen-Verbindungsfläche 38 an. An den axialen Endbereich mit kleinster radialer Abmessung der Sondenstutzen-Verbindungsfläche 38 schließt eine Sondenstutzen-Stirnfläche 40 an, die, ebenso wie die Sondenstutzen-Verbindungsfläche 38, die Sondenaufnahmeöffnung-Längsachse L ringartig umgibt und in Richtung der Sondenaufnahmeöffnung-Längsachse L orientiert ist. Dies bedeutet, dass die Sondenstutzen-Stirnfläche 40 sich im Wesentlichen orthogonal zur Sondenaufnahmeöffnung-Längsachse von radial innen nach radial außen erstreckt. Am proximalen axialen Ende 32 weist der Sondenstutzen 24 ferner einen von der Sondenstutzen-Stirnfläche 40 umgebenen Zentrieransatz 42 auf.

Somit kann der Sondenstutzen 24 im Wesentlichen in drei Längenabschnitte unterteilt werden. Ein ausgehend vom distalen axialen Ende 30 sich erstreckender Längenabschnitt ist von der beispielsweise im Wesentlichen zylindrischen Außenumfangsfläche 36 umgeben und stellt am distalen axialen Ende 30 eine die Sondenaufnahmeöffnung 34 ringartig umgebende und bezüglich der Sondenaufnahmeöffnung-Längsachse L sich im Wesentlichen orthogonal radial erstreckende Messsonden-Anlagefläche 43 bereit. An diesen Längenabschnitt schließt ein im Wesentlichen die Sondenstutzen-Verbindungsfläche 38 bereitstellender und entsprechend der beispielsweise im Wesentlichen konischen Struktur der Sondenstutzen-Verbindungsfläche 38 sich radial verjüngender Längenabschnitt an, an welchen wiederum der im Wesentlichen den Zentrieransatz 42 bereitstellende dritte Längenabschnitt anschließt.

Der beispielsweise mit austenitischem Metallmaterial aufgebaute Sondenstutzen 24 wird in einer in Fig. 3 dargestellten Art und Weise an der Wand 18 des durch die Abgasführungskomponente 12 bereitgestellten Sondentragekörpers 14 festgelegt.

Wie in Fig. 3 durch Strichlinie dargestellt, weist der Sondentragekörper 14 bzw. die Abgasführungskomponente 12 im Allgemeinen eine gekrümmte, beispielsweise kreisförmig gekrümmte Querschnittsgeometrie auf. Um an eine derartige gekrümmte Querschnittsgeometrie den Sondenstutzen 24 im Bereich seines proximalen axialen Endes 32 stabil und insbesondere auch gasdicht anbinden zu können, ist im Bereich einer in der Wand 18 ausgebildeten Wandöffnung 44 die Wand 18 in Richtung nach außen, also vom Abgasströmungsraum 16 weg ungeformt, um ein Verbindungsplateau 46 bereitzustellen, in welchen die Wandaußenoberfläche 22 der Wand 18 im Wesentlichen ungekrümmt, d. h. zu einer Wandöffnung-Mittenachse M im Wesentlichen orthogonal sich erstreckend ausgebildet ist. Im Bereich dieses Verbindungsplateaus 46 ist ein Verbindungsabschnitt 48 der Außenoberfläche 22 der Wand 18 gebildet, in welchem der Sondenstutzen 24 durch ein Verbindungsmaterial 50 an der Wand 18 festgelegt ist.

Das vorzugsweise durch eine die Wandöffnung 44 vollständig ringartig umgebende Verbindungsmaterial 50 ist vorzugsweise durch eine Schweißnaht bereitgestellt, und ist einerseits an das Aufbaumaterial der Wand 18 im Bereich des Verbindungsabschnitts 48 derselben angebunden und andererseits an das Aufbaumaterial des Sondenstutzens 24 im Bereich der Sondenstutzen-Verbindungsfläche 38 angebunden. Somit ist ein stabiler und gasdichter materialschlüssiger Verbund bereitgestellt, in welchem der beispielsweise mit austenitischem Metallmaterial aufgebaute Sondenstutzen 24 mit dem beispielsweise durch ferritisches Metallmaterial bereitgestellten Aufbaumaterial der Wand 18 fest verbunden ist. Da im Allgemeinen auch das Verbindungsmaterial 50 als ferritisches Metallmaterial bereitgestellt ist, ist somit im Bereich der Anbindung des Sondenstutzens 24 an die Wand 18 einerseits aufgrund der Anfasung des Sondenstutzens 24 im Bereich des proximalen axialen Endes 32 zum Bereitstellen der Sondenstutzen-Verbindungsfläche 38 der Volumenanteil an austenitischem Metallmaterial verringert, und ist andererseits der Volumenanteil an ferritischem Metallmaterial erhöht.

Dies führt zu einer auch bei den im Betrieb einer Brennkraftmaschine aufgrund unterschiedlicher thermischer Ausdehnungen auftretenden thermomechanischen Belastungen sehr hohen Verbindungsstabilität. Dazu trägt insbesondere auch bei, dass der Verbindungsabschnitt 48 der Wandaußenoberfläche 22 die Sondenstutzen-Verbindungsfläche 38 vollständig radial überlappt und sich einerseits nach radial innen bis in den Bereich der Sondenstutzen-Stirnfläche 40 erstreckt und somit eine definierte flächige Abstützung des Sondenstutzens 24 an der Wand 18 ermöglicht und andererseits sich zumindest geringfügig auch nach radial außen über die Außenumfangsfläche 36 des Sondenstutzens 24 hinaus erstreckt. Die Sondenstutzen-Stirnfläche 40 bildet somit eine Wandanlagefläche 41, mit welcher der Sondenstutzen 24 an der Wandaußenoberfläche 22 der Wand 18 im Bereich des Verbindungsplateaus 46 anliegt. Dies ermöglicht es, auch das Verbindungsmaterial 50 in derartiger Menge einzubringen, dass dieses einerseits die gesamte Sondenstutzen-Verbindungsfläche 38 und den diese radial überlappenden Teil des Verbindungsabschnitts 48 der Wandaußenoberfläche 22 überdeckt und andererseits sich nach radial außen über die Außenumfangsfläche 36 des Sondenstutzens 24 hinaus erstreckt, wodurch die Wechselwirkungsfläche zwischen dem Verbindungsmaterial 50 und der Wand 18 vergleichsweise groß dimensioniert ist. In ihrem radial äußeren Bereich kann die das Verbindungsmaterial 50 bereitstellende Schweißnaht sich beispielsweise bis in den an den im Wesentlichen ungekrümmten Verbindungabschnitt 48 der Wandaußenoberfläche 22 anschließenden, konvex gekrümmten Bereich der zum Bereitstellen des Verbindungsplateaus 46 nach außen verformten Wand 18, also über den ungekrümmten Verbindungsabschnitt 48 hinaus, erstrecken.

Um mit einfachen technischen Maßnahmen die Wand 18 zum Bereitstellen des ausreichend groß dimensionierten Verbindungsplateaus 46 umformen zu können, kann die Wand 18 in dem Bereich, in welchem die Wandöffnung 44 gebildet oder zu bilden ist, durch Ziehen, insbesondere Tiefziehen oder Steckziehen, unter Einsatz entsprechender Formwerkzeuge umgeformt werden. Dieser Vorgang zum Umformen der Wand 18 kann durchgeführt werden, nachdem die Wandöffnung 44 in demjenigen Bereich, in welchem nachfolgend das Verbindungsplateau 46 gebildet werden soll, bereits erzeugt wurde. Um zu gewährleisten, dass bei diesem Umformen die Querschnittsgeometrie der Wandöffnung 44 nicht verändert wird, kann bei einer alternativen Vorgehensweise die Wandöffnung 44 erst nach dem Umformen der Wand 18 zum Erzeugen des Verbindungsplateaus 46 beispielsweise durch Ausstanzen oder Ausschneiden erzeugt werden.

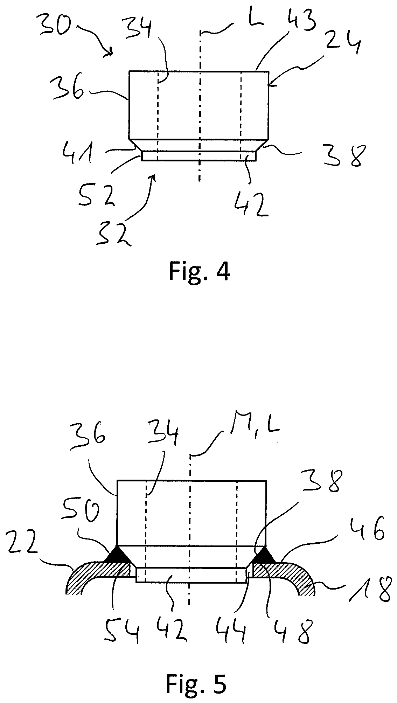

Eine alternative Ausgestaltungsform des Sondenstutzens 24 ist in Fig. 4 dargestellt. Bei dieser Ausgestaltungsform schließt der Zentrieransatz 42 mit seiner beispielsweise zylindrischen und somit im Wesentlichen in Richtung der Sondenaufnahmeöffnung-Längsachse L sich erstreckenden Außenumfangsfläche 52 direkt an die Sondenstutzen-Verbindungsfläche 38 an. Der bei der Ausgestaltungsform der Fig. 2 durch die Sondenstutzen-Stirnfläche 40 bereitgestellte stufenartige Übergang ist bei dieser Ausgestaltungsform nicht vorhanden.

Beim Anbinden dieses Sondenstutzens 24 an die Außenoberfläche 22 der Wand 18 wird der Sondenstutzen 24 mit seiner Sondenstutzen-Verbindungsfläche 38 an einem die Wandöffnung 44 umgebenden kantenartigen Randbereich 54 der Wand 18 anliegend positioniert. Die Sondenstutzen-Verbindungsfläche 38 bildet somit die Wandanlagefläche, mit welcher der Sondenstutzen 24 an der Wand 18 im Bereich des Verbindungsplateaus 46 anliegt. Es entsteht dabei im Wesentlichen ein linienartiger Anlagekontakt zwischen dem Sondenstutzen 24 und der Wand 18, wodurch aufgrund der dadurch im Vergleich zur Ausgestaltungsform der Fig. 2 und 3 verringerten Kontaktfläche zwischen den Sondenstutzen 24 und der Wand 18 der Wärmeübertrag auf den Sondenstutzen 24 verringert werden kann.

Bei der in den Fig. 4 und 5 dargestellten Ausgestaltung des Sondenstutzens 24 überdeckt der Verbindungsabschnitt 48 der Wandaußenoberfläche 22 die Sondenstutzen-Verbindungsfläche 38 nicht vollständig in radialer Richtung. Für eine hohe Verbindungsfestigkeit ist es jedoch vorteilhaft, wenn der Verbindungsabschnitt 48 wenigstens 50%, vorzugsweise wenigstens 70%, der Radialerstreckung der Sondenstutzen-Verbindungsfläche 38 überdeckt.

In dem von dem Verbindungsabschnitt 48 radial überdeckten bzw. überlappten Bereich der Sondenstutzen-Aufnahmefläche 38 ist das Verbindungsmaterial 50 an die Sondenstutzen-Verbindungsfläche 38 und an den Verbindungsabschnitt 48 der Wandaußenoberfläche 22 angebunden. Auch bei dieser Ausgestaltungsform erstreckt das Verbindungsmaterial 50 sich nach radial außen über den Überlappungsbereich und damit auch die Außenumfangsfläche 36 des Sondenstutzens 24 hinaus, um eine erhöhte Verbindungsfestigkeit nicht nur durch eine vergleichsweise große Wechselwirkungsfläche zwischen dem Verbindungsmaterial 50 und dem Verbindungsabschnitt 48, sondern auch einen größeren Volumenanteil an ferritischem Metallmaterial im Bereich der Anbindung des Sondenstutzens 24 an die Wand 18 zu erreichen.

Die erfindungsgemäß aufgebaute Sondentragebaugruppe, von welcher an einer Abgasanlage auch mehrere vorgesehen sein können, gewährleistet aufgrund der Erhöhung des ferritischen Metallanteils bei verringertem Bauraumbedarf eine auch unter den auftretenden thermischen und mechanischen Belastungen stabile Verbindung. Aufgrund des Umstandes, dass bei einer mit gekrümmter Außenumfangskontur bereitgestellten Wand der zum Bereitstellen des im Wesentlichen ebenen Verbindungsplateaus umgeformte Bereich der Wand nach außen, also in Richtung von dem von der Wand umgrenzten Abgasströmungsrand weg verformt ist, besteht guter Zugang zu demjenigen Bereich, in welchem die materialschlüssige Verbindung, insbesondere eine Schweißverbindung, durch das Einbringen des Verbindungsmaterials zwischen die Sondenstutzen-Verbindungsfläche und den Verbindungsabschnitt der Wandaußenoberfläche und nach radial außen über die Außenumfangsfläche des Sondenstutzens hinausstehend zu erzeugen ist.

## Patentansprüche

1. Sondentragebaugruppe, insbesondere für eine Abgasanlage einer Brennkraftmaschine, umfassend:
- einen Sondentragekörper (14) mit einer Wand (18), wobei in der Wand (18) eine an einer Wandaußenseite (20) von einer Wandaußenoberfläche (22) umgebene Wandöffnung (44) vorgesehen ist,
- einen im Bereich der Wandöffnung (44) an der Wandaußenoberfläche (22) festgelegten Sondenstutzen (24), wobei in dem Sondenstutzen (24) eine den Sondenstutzen (24) in Richtung einer Sondenaufnahmeöffnung-Längsachse (L) von einem von der Wand (18) entfernt positionierten distalen axialen Ende (30) des Sondenstutzens (24) zu einem der Wand (18) naheliegend positionierten proximalen axialen Ende (32) des Sondenstutzens (24) durchsetzende Sondenaufnahmeöffnung (34) vorgesehen ist,
wobei im Bereich des proximalen axialen Ende (22) des Sondenstutzens (24) eine die Sondenaufnahmeöffnung (24) ringartig umgebende, bezüglich der Sondenaufnahmeöffnung-Längsachse (L) angewinkelte Sondenstutzen-Verbindungsfläche (38) mit in Richtung von dem distalen axialen Ende (30) des Sondenstutzens (24) weg abnehmendem Radialabstand zur Sondenaufnahmeöffnung-Längsachse (L) vorgesehen ist, wobei der Sondenstutzen (24) durch an die Sondenstutzen-Verbindungsfläche (38) und an einen Verbindungsabschnitt (48) der Wandaußenoberfläche (22) angebundenes Verbindungsmaterial (50) an der Wand (18) festgelegt ist.

2. Sondentragebaugruppe nach Anspruch 1,
**dadurch gekennzeichnet, dass** der Sondenstutzen (24) mit einer im Bereich des proximalen axialen Endes (32) ausgebildeten Wandanlagefläche (41) an der Wand (18) anliegt.

3. Sondentragebaugruppe nach Anspruch 2,
**dadurch gekennzeichnet, dass** an die Sondenstutzen-Verbindungsfläche (38) eine im Wesentlichen axial orientierte und im Wesentlichen orthogonal zur Sondenaufnahmeöffnung-Längsachse (L) sich erstreckende, die Sondenaufnahmeöffnung-Längsachse (L) ringartig umgebende Sondenstutzen-Stirnfläche (40) anschließt, und dass die Sondenstutzen-Stirnfläche (40) die Wandanlagefläche (41) bereitstellt.

4. Sondentragebaugruppe nach Anspruch 3,
**dadurch gekennzeichnet, dass** an dem Sondenstutzen (24) im Bereich des proximalen axialen Endes (32) ein über die Sondenstutzen-Stirnfläche (40) sich axial hinaus erstreckender, von der Sondenstutzen-Stirnfläche (40) umgebener Zentrieransatz (42) vorgesehen ist.

5. Sondentragebaugruppe nach Anspruch 2,
**dadurch gekennzeichnet, dass** die Sondenstutzen-Verbindungsfläche (38) die Wandanlagefläche (41) bereitstellt.

6. Sondentragebaugruppe nach Anspruch 5,
**dadurch gekennzeichnet, dass** an dem Sondenstutzen (24) im Bereich des proximalen axialen Endes (32) ein an die Sondenstutzen-Verbindungsfläche (38) anschließender und über diese sich axial hinaus erstreckender, von der Sondenstutzen-Verbindungsfläche (38) umgebener Zentrieransatz (42) vorgesehen ist.

7. Sondentragebaugruppe nach einem der Ansprüche 1-6,
**dadurch gekennzeichnet, dass** die Sondenstutzen-Verbindungsfläche (38) im Wesentlichen konisch ausgebildet ist.

8. Sondentragebaugruppe nach einem der Ansprüche 1-7,
**dadurch gekennzeichnet, dass** das Verbindungsmaterial (50) durch eine Schweißnaht bereitgestellt ist.

9. Sondentragebaugruppe nach einem der Ansprüche 1-8,
**dadurch gekennzeichnet, dass** an der Wand (18) im Bereich der Wandöffnung (44) ein Verbindungsplateau (46) ausgebildet ist, wobei an dem Verbindungsplateau (46) der die Wandöffnung (44) umgebende, in Richtung einer Wandöffnung-Mittenachse (M) orientierte und zu der Wandöffnung-Mittenachse (M) im Wesentlichen orthogonal sich erstreckende Verbindungsabschnitt (48) der Wandaußenoberfläche (22) vorgesehen ist.

10. Sondentragebaugruppe nach Anspruch 9,
**dadurch gekennzeichnet, dass** das Verbindungsplateau (46) an der Wand (18) durch Umformen der Wand (18) in Richtung zur Wandaußenseite (20) und in Richtung von einem von der Wand (18) begrenzten Innenraum weg gebildet ist.

11. Sondentragebaugruppe nach Anspruch 10,
**dadurch gekennzeichnet, dass** das Verbindungsplateau (46) durch Ziehen, vorzugsweise Tiefziehen oder Streckziehen, der Wand (18) gebildet ist.

12. Sondentragebaugruppe nach einem der Ansprüche 9-11,
**dadurch gekennzeichnet, dass** der Verbindungsabschnitt (48) der Wandau-ßenoberfläche (22) die Sondenstutzen-Verbindungsfläche (38) wenigstens teilweise radial überlappt und sich nach radial außen über eine vorzugsweise im Wesentlichen zylindrische Außenumfangsfläche (36) des Sondenstutzens (24) hinaus erstreckt, und dass das Verbindungsmaterial (50) sich radial nach außen über die Außenumfangsfläche (36) des Sondenstutzens (24) hinaus erstreckt.

13. Verfahren zur Herstellung einer Sondentragebaugruppe nach einem der Ansprüche 9-12, bei welchem Verfahren das Verbindungsplateau (46) durch Ziehen, vorzugsweise Tiefziehen oder Streckziehen, der Wand (18) gebildet wird.

14. Abgasanlage, insbesondere für eine Brennkraftmaschine in einem Fahrzeug, umfassend wenigstens eine Sondentragebaugruppe (28) nach einem der Ansprüche 1-12.

15. Abgasanlage nach Anspruch 14,
**dadurch gekennzeichnet, dass** die Wand (18) einen Abgasströmungsraum (16) begrenzt, wobei die Wandaußenseite (20) von dem Abgasströmungsraum (16) weg orientiert ist, und dass an dem Sondenstutzen (24) eine Messsonde (26) getragen ist.

16. Abgasanlage nach Anspruch 15
**dadurch gekennzeichnet, dass** die Messsonde (26) zur Bereitstellung von eine Temperatur im Bereich des Abgasströmungsraums (16) repräsentierender Information oder zur Bereitstellung von eine Zusammensetzung von den Abgasströmungsraum (16) durchströmendem Abgas (A) repräsentierender Information ausgebildet ist.
